# EUROPEAN PATENT APPLICATION

(11) **EP 0 953 374 A1**
(43) Date of publication of application: **03.11.1999**
(21) Application number: 97929631.6
(22) Date of filing: 23.06.1997
(51) Int. Cl.: B01D 53/86, B01D 53/94, B01D 135/00

(54) **METHOD FOR PURIFYING EFFLUENT GASES**

(30) Priority: 24.06.1996 RU 96112394
(71) Applicant: LOGINOV, Alexandr Jurievich, Moscow, 107076 (RU); Ivanov, Arcady Alexandrovich, Moscow, 117321 (RU); Ustinov, Oleg Alexandrovich, Moscow, 123098 (RU)
(72) Inventor: LOGINOV, Alexandr Jurievich, Moscow, 107076 (RU); Ivanov, Arcady Alexandrovich, Moscow, 117321 (RU); Ustinov, Oleg Alexandrovich, Moscow, 123098 (RU)
(74) Representative: Einsel, Martin, Dipl.-Phys.
(86) International application number: RU9700197
(87) International publication number: WO9749480

(57) **Abstract**

The present invention relates to the purification of exhaust gases from non-stationary internal combustion engines such as those used in petrol or diesel vehicles, as well as to the purification of industrial waste containing nitrogen oxide and products from the incomplete combustion of various fuels. The purification of gases is essentially carried out during different NOₓ reduction and oxidation stages by performing a treatment using different layers of oxide catalysts which are applied on highly porous block supports and onto a carbon-black filter. This method also uses oxide compositions of transition metals, compounds of the perovskite and zeolite type as well as modification agents free from Pt metals. In order to neutralise poor fuel effluents, complementary reduction reagents are added such as hydrocarbons for carbonating the support and filter surfaces, or nitrogen-containing reducing agents after cooling the gases in a heat-exchanger. This invention may be used to improve the efficiency and completeness of an economical gas purification process, as well as for purifying exhaust gases from internal combustion engines in oxygen-excess conditions using a reserve of reducing reagents while warming up a cold engine.

## Description

### Field of the Invention

The invention relies to the complex gas purification technology and can be used for neutralization of nitrogen oxides (NOₓ) and products of incomplete combustion (carbon-black particles, carbon oxide (CO), hydrocarbons (HC)) in exhaust gases of internal combustion engines of automotive, water, railway transport and of exhaust gases of stationary power stations.

### Background of the Invention

The main traditional way of exhaust gas purification is based on using of one 3-way catalyst which besides oxidation of CO and hydrocarbons makes simultaneous deoxidization of NOₓ to neutral molecules in thin oxidation-reduction conditions (lambda=1) /T.J. Truex, R.A. Searles, D.C. Sun, Plaminum Metals, Rev., 1992, v.36, (1), p. 2: WO 95/235, 1995/.

To do this multi-component catalyst systems, containing precious metals (Pt, Rh, Rd, Ru) applied on block carriers of a cellular structure, are used /P.N. Hawker, Diesel Emission Control Technology, Plaminum Metals, Rev., 1995, v. 39, (1), 2/.

But the mentioned above catalytic methods are not universal, they contain expensive active components, which are subjected to drag-out and new environment pollution.

In addition, for mobile diesel engines, working at lower temperatures in oxidation conditions (10-15% O₂, lambda=2), whose exhaust gases contain solid carbon-black particles, polyaromatic carcinogenic hydrocarbons, and sulfur, existing 4-function Pt-Rh catalysts cannot give full protection.

For purification of diesel exhaust gases with oxygen excess the main value receives the problem of neutralization of the main toxic components - nitrogen oxides (De-NOₓ) and carbon-black. In these conditions even the most perfect ceramic 〈〈wall-flow〉〉 carbon-black regenerable filters, despite of usage of extra blocks with applied Pt-catalysts, don't solve the problem of De-NOₓ in proper way /B.J.Cooper and S.A. Roth, Plaminum Metals, Rev., 1991, v.35, (4), p. 178/. The same is about the filters, where carbon-black regeneration is done with the help of electric heaters or burners, placed before the filter /New Technology and Advances in Automative Applications, Plaminum Metals, Rev., 1995, v. 39, (3) p. 112-116/.

For mitigation of nitrogen oxides in power stations emissions is widely used the method of selective catalytic regeneration (SCR) of NO with ammonia or hydrocarbons, used as regenerating agents /Cat. Today, Catalytic Reduction of Nox. A Review on the Fundamentals and Technology, 1987, v. 2, (4), p. 365-529; US, 5, 354, 544, 1995/.

The low-temperature selective non-catalytic regeneration (SNCR) is known, in which as regenerating agents are used compounds like carbamide and its derivatives, which are convenient to be loaded in reaction area in form of a water solution /O.A. Ustinov and others, Chem. Industry, 1991, No. 11, p. 673-675; 1995, No. 7, p. 29-31/. The SNCR method with usage of fiber and granulate carriers is described /RU, 1, 433, 486, 1988/.

In this method the regenerator - carbamide is loaded on the carriers' surfaces and selectively used in neutralization reaction up to full exhaustion. This method has a number of considerable advantages before SCR: there is no need to constantly control the required reagents ratio, expensive and non-stable catalysts, which is poisoned with sulfur dirt, and possibility to work at oxygen excess and low temperatures.

The main imperfection of this method SNCR is low collection efficiency of nitrogen monoxide, the main component of exhaust gases. So, while using carbamide, though NO₂ conversion reaches 80-90%, NO conversion remains low. This significant imperfection in /US, 5, 348, 715, 1994/ is eliminated by introduction of special oxidizers (O₃, KMnO₄, ClO₂ and etc.) to oxidize NO into NO₂. But it is not economical, as the oxidizing agents are consumed in large quantities.

Relatively close to the offered method in technical entity and according to the gained result is a two-stage method of gas purification, which includes usage of two layers of catalysts /RU, 2 042, 406, 1995/.

At the first stage on oxide zinc-chrome catalytic layer oxidation of methane, which is introduced into oxygen-bearing gas medium as a regenerator. At the second stage the purifying from nitrogen oxides gases in more regenerative conditions are passed through the second layer of oxide aluminum-copper-nickel-lithium catalyst.

Imperfections of this method is irrational consumption of the regenerating agent - methane, especially for vitiated fuel emissions, relatively high conversion temperatures, gasdynamic resistance of catalyst and acid inpersistence of the aluminum oxide carrier.

The other variant of the SCR method of NOₓ with the help of hydrocarbon compounds on copper-zeolite ion-exchange catalysts is applied in /US, 5, 354, 544, 1995/. For the deeper conversion it is offered to use another layer of catalyst of complete oxidation made on basis of precious metals. The usage of afterburning catalysts before SCR catalysts is considered inexpedient because of CO₂ oxidation /Cat. Today, Catalytic Reduction of Nox. A Review on the Fundamentals and Technology, 1987, v. 2, (4), p. 365-529/.

### Disclosure of the Invention

The main task at development of a new way of purification was to avoid the imperfections of the most existed catalytic methods:
1. To simplify the system of batching of regenerator (R): R=NO, which exists in any of the numerous SCR method variants.
2. To trap out, store, and regenerate diesel carbon-black emissions.
3. To do catalysts selection not only for oxygen activation, but for Nox (nitrosile, nitrite complexes), and to avoid using Pt-metals, 〈〈afterburning〉〉 catalysts. The latter statement is connected with the fact, that in diesel exhaust gases (lambda=2), where the problem of De-NOₓ is especially important, the quantity of nitrogen oxide is larger, than HC and CO (20-40% more in stoicheometry). So it is necessary to more completely use NOₓ as oxidizer, and not to directly afterburn regenerators with oxygen.

The closest to the proposed method according to mentioned above tasks is the method, proposed for diesel engines by employers of the Johnson Mattey firm /B.J. Cooper and S.A. Roth, Plaminum Metals, Rev., 1991, v.35, (4), p. 178; EP, 0, 341, 832, B1, 10.01.1996 (prototype)/. There is suggested to use a ceramic filter without catalyst, and to place before it a Pt-bearing catalyst on block cellular carrier for regeneration of intercepted carbon and simultaneous afterburning of CO and HC on the catalyst. During this almost complete oxidation of regenerators is gained with conversion of 98% CO, 96% HC, but only 6% of NOx. In later variants of the method /EP, 0, 341, 832, B1, 10.01.1996 (prototype)/ for improvement DE-NOx the authors suggest to use vanadium catalyst on a porous filter.

The idea of storing the regenerator for DE-NOx in form of carbon-black, deposited on the filter, in this method is not completely realized, as there is constant excess of non-reacted oxidizers - nitrogen oxides. Besides, during reaction of nitrogen dioxide with carbon occurs undesirable emission of NO and CO. The usage of vanadium catalyst for their regeneration and Pt catalyst for oxidation is not very effective because of the smaller activity of NO in comparison with NO₂.

In order to eliminate the mentioned above imperfections in the offered method of gas purification their treatment includes at least two stages: primary catalytic oxidation of nitrogen monoxide with oxygen and following regeneration of formed nitrose gases (NO, NO₂) with regenerating agents. The new thing in this method is that in the first stage oxidation is made and several oxide catalyst layers are used, and in the second stage regeneration of nitrogen oxides is made and oxide catalyst on a porous carrier, or filter, where carbon-black particles are stored. To purify poor combustible gases it is suggested to do a supplemental introduction of carbon-bearing, or N-bearing regenerating agents, and to use layers of modified carrier and filter.

The additional differences are:
- usage at each stage of catalysts on block porous ceramic carriers, or on cellular-structure filters of extended transmissivity, made on base of cordierite, alumina, or zeolites;
- usage of oxide compositions of transition metals and base elements, for example, perovskite, on the carrier;
- usage of hydrocarbon organic compounds, caught, stored and regenerated in form of carbon-bearing regenerating agents on the carrier and filter;
- usage of catalysts and carriers with conductive additives for achieving heaters with specific resistance of blocks of 0,1-2000 Ohms*cm, and boosting temperature on 100-300°C;
- usage of perovskite catalyst as a conductive additive;
- usage of transition metals as modifiers in quantities of 1-30 mass %;
- usage of carbamide, ammonia bicarbonate and other compounds and their mixtures as water-soluble N-bearing agents;
- usage of a heat-exchanger for cooling the gas stream down to 20-150°C after filter;
- usage of air, water, or water solutions of reagents for their introduction into the gas stream in quantities of 50-100 g/m³, containing 50-400 g/l reagents.

### Preferred Embodiment of the Invention

At the first stage the efficient oxide catalyst on block porous ceramic carrier is used for oxidation of NO and NO₂ source molecules.

At the second stage for regeneration and collecting of NOx in diesel emissions a carbon-black ceramic filter with oxide catalyst of regenerative or combined action for additional reoxidation of NO, produced during reaction of nitrose gases with carbon-black particles, is used. Perhaps, we can speak about prevailing division of reactions at the oxidation and regeneration stage in different catalyst layers. As produced on the oxidizing catalyst NO₂ molecules partially react with regenerators, the simultaneous reactions in the same layer of developed selective catalyst depend on the gas composition. Besides, it was found, that on oxide regeneration catalysts may be reaction of disproportionation of NO with production of N₂O, studied in homogenous catalysis.

So, for diesel emissions we may use, for example, alternation of several stages with usage of different layers of oxide catalysts (table 1,2).

The known complicating factor of combustible gases purification from NOx is high concentration of water vapors (6-10%). Near the condensation temperature the remaining nitrose gases form acids, from which the nitrous acid is easily depleted, and 1/3 of NO₂ is converted back into NO (the problem of nitric acid technology). Especially easy it is done on the cooled down to the condensation point catalyst surface. In the offered method to avoid this effect, and for more complete inhibition of remained after the catalytic processing nitrose gases, they are condensed in the heat-exchanger together with water vapors. After this the acidic remains, and absorbed oxides are neutralized by the nitrogen-bearing water-soluble regenerators, impregnated on surfaces of block porous carrier, for example, zeolite. The property of this final stage of regeneration, whose mechanism is discussed by one of the authors /O.A. Ustinov and others, Chem. industry, 1991, No. 11, p. 673-675; 1995, No. 7, C. 29-31/, is lack of secondary decomposition emissions in form of NOx.

To implement this staged method of purification it was offered to use block carriers and catalysts of increased porosity with parallel regular cellular structure channels and gas permeable walls between channels for gas filtration.

The advantage of used carriers on alumina, cordierite, zeolites (natural or synthetic) is combination of high strength characteristics of cellular blocks, thermal, and acid resistance with porosity of channels' walls (50-60%), what allows use them as efficient catalysts and filter-catalysts (tables 1, 2, 3).

To implement the first stage the combination of efficient oxidizing capacity and stability is needed. These characteristics have oxide compositions on basis of transition metals, base and rare-earth and other elements, including thermo-resistance multi-component oxides with structure like perovskite of the following composition: ABO₃, where A - rare- and alkaline-earth elements, and B - transition elements, not including Pt-metals /T.Seilyame, Properties and Application of Perovskite-Type Oxides, New York, 1993/.

The property of this method is usage of catalytic, electro- and thermoconductive characteristics of these materials. Being applied onto porous ceramic block, or extruded in form of cellular ceramic structures, perovskites with high metal and semiconductive conductivity give the ceramic block electric conductive characteristics. This way, applied catalytic block, or carbon-black filter become conductive with specific resistance 0,1-2000 Ohm*cm, and exhaust gases can be heated on 100-300°C by electric current. As a result, the efficiency of thermoregulated catalyst increases dramatically, and gas purification is carried out on cold engine. The results of such catalytic neutralizers and heater work are given in table 3.

### Industrial usage

The property of the method is the possibility to carry out purification not only diesel, but also gasoline exhaust gases in oxidation conditions (1-5% O₂) from CO, HC, and NOx with usage of block oxide catalysts, and while using the filter with heating catalyst to do complete purification from carbon-black particles, hydrocarbon compounds, and CO with purification efficiency of 80-90%.

Besides, purification of exhaust gases from polymeric and carbon-black carcinogenic compounds, the oxidizing layer helps serviceability and purity of the regenerating catalyst layer in output channels of the filter and block carrier. The excess of regenerating compounds (CO and HC) in comparison with emissions of NO in gasoline engines is compensated by the additional introduction of oxygen and other oxygen-bearing oxidizing agents, for example, O₃, H₂O₂.

In the case of industrial exhaust gases, containing in practice only one NOx, as a variant of the offered method, may be used oxide catalyst for nitrose gases oxidation with after regeneration of them with N-bearing regenerative agents, for example, without filter usage.

As a result, in every case the same main problem of De-NOx is solved by primary oxidation of NO and generation of reactive form of NO₂, as neutralization of NO is the most complicated. To do this, oxide catalysts showed advantage before the Pt-catalysts according to conversion depth and reaction temperature (table 2).

So, the usage of the summation of properties allows to provide novelty and logical connection of stages of the given purification method. So, the method refers to complex gas emissions purification, where besides complete HC, CO, and carbon-black oxidation, the task of more complete (for example, in comparison with prototype) removal of the most toxic components - nitrogen oxides.

At the second stage for solving the task of NOx regeneration after primary partial oxidation of CO, CHx, and carbon-black additions while reacting with NO₂, carbon-black and heavy organic compounds are captured and stored on the filter. For this purpose the high-penetrable filters, which with applied catalyst have gasdynamic resistance of no more, then 4 kPa. Such filters-catalysts can work without regeneration and store carbon-black during several hours of diesel engine work. This way, at the second stage positive result is gained by combination of filtering and catalytic processes with non-catalytic gas- and liquid-phase reactions at extra regenerators loading. Such organic compounds can be, for example, aromatic compounds, like cyclohexen, cumole, styrene, and others, which are easily subjected to oxidizing transformations: polymerization, polycondensation, and other, and while depositing on catalyst and filter layers, produce a store of reagents, not impairing the gasdynamic conditions.

In order to eliminate imperfections of known method SNCR and gain new positive purification results the following significant changes were introduced:
1. Granulated carrier layer was changed to monolithic more mechanically durable, acid- and waterproof blocks, what allows to increase the resource of the purifying system.
2. High-porous block carriers prevent reactor clogging, and lower the gasdynamic resistance, what allows to increase the linear gas-flow speed on 0,1-0,3 m/s without affecting the efficiency.
3. High channel density in the neutralizer-adsorbent allows to enlarge the contacting with purifying gas surface and, as a result, to increase the purification efficiency (table 2).
4. The continuous atomizing supply of regenerating solutions, or water in form of mist helps their neutralization on the porous carrier surface.
5. The load of modifying additives into zeolites in form of transition metals (copper, iron, manganese, nickel, cobalt, chrome and others, 1-30% mass.) helps sorption and regeneration of the remaining part of nitrogen oxides, and this way, in addition to the previous stages, makes storing and neutralization easier.

The given examples illustrate the given purification method.

### Example 1.

The catalytic activity of neutralizers was investigated in the stream of exhaust gas products of natural gas burning, which consisted: 5% O₂, 10% CO₂, 18% H₂O (vol.). Into the stream were also loaded 1000 ppm NO and regenerating agents: 1000 ppm CO, 140 ppm CH₄, or 500% of cumole. The gas mixture was proceeded in one, or several catalyst layers at the volume velocity of 36000 /h (contact time = 1 sec.) by passing through reactor, in which the temperature of 190-450°C was sustained. There were used oxide catalysts, applied on porous cellular ceramics, made on the base of alumina (A), cordierite (C), or zeolite (Z), whose characteristics are given in the table 1:

| Carrier characteristics | A | C | Z |
|---|---|---|---|
| Channel (walls) size, mm | 1.6 | x 1.6 | (0.4) |
| Channel density, channel number/sm² | 25 | 25 | 25 |
| Ceramic blocks density, kg/l | 0.55 | 0.42 | 0.48 |
| Working surface of the blocks, m²/l | 1.65 | 1.65 | 1.65 |
| Free volume ratio, % | 64 | 64 | 64 |
| Carriers open pores volume, mg/l | 0.5 | 0.41 | 0.39 |
| Blocks longitudinal crushing strength, kg/cm² | 110 | 100 | 90 |
| Thermal strength of blocks, °C | 1300 | 1200 | 800 |

Descriptions and formulas of used catalysts: 1 - La₀₈Sr₀₂MnO₃, 2 - La₀₈Sr₀₂Cr₀₈Ni₀₂O₃, 4 - Pt-0.5%/Al₂O₃, 5 - CuO - mordenite, 6 - Cu₃O₄ - clinoptylolite, 7 - Fe-Mn oxides, 8 - Ni-Cr-Zr oxides, 9 - Co-Fe-Cr oxides. Ceramic blocks contained 20-30 mass % of catalyst (100-150 g/l), loaded into the carrier pores together with the binding method of vacuum saturation. Perovskite and oxide catalysts were prepared by degradation of nitrates, or co-precipitated hydroxides of used metals at the temperature of 800 and 600°C correspondingly. They were applied either by the precipitation method from solutions or suspensions, or by blocks forming using plasticizers and binding components.

For gases analysis were used combustion products gas-analyzer Testo-350, chromatograph, and smoke gage (f. Bosch).

The results of testes of the purification method in different catalyst layers are given in table 2 for the temperature of 320°C. Near this temperature (mean temperature of exhaust gases) the oxidation conversion of NO passed through the maximum of temperature activity, whose position is determined by adsorption-catalytic and thermodynamic characteristics. The characteristic temperature responses with the maximum were also seen during addition of regenerative components into the stream. In the table the results of catalytic efficiency of the purification method of NO oxidation, and after regeneration of NO₂ in different catalyst layers are given.

**Table 2**

| N^{º} | Gas composition | 1 layer | 2 layer | 3 layer | 4 layer | Products composition /ppm/ | | | |
|---|---|---|---|---|---|---|---|---|---|
| | | 320° C | 320° C | 320° C | (carbamide) | NO | NO₂ | CO | HC |
| 1 | NO | 1/A | - | - | - | 500 | 280 | - | - |
| 2 | NO | 4/C | - | - | - | 680 | 110 | - | - |
| 3 | NO | 6/Z | - | - | - | 450 | 350 | - | - |
| 4 | NO+CO | 7/A | 5/Z | - | - | 300 | 85 | 50 | - |
| 5 | NO+CO+CH₄ | 6/Z | 8/A | 5/Z | - | 205 | 50 | - | 10 |
| 6 | NO+CO+CH₄ | 1/A | 9/A | - | 5/Z | 210 | 10 | 35 | 15 |
| 7 | NO+"C"(HC) | 9/A | 3/F | - | 6/Z | 195 | - | 100 | - |
| 8 | NO+"C"(HC) | 9/A | 8/F | 5/Z | - | 155 | 60 | - | - |
| 9 | NO+"C"(HC) | - | 9/F | - | 6/Z | 310 | 56 | 250 | - |
| 10 | NO+CO+CH₄ | 6/Z | - | - | 5/Z | 390 | 80 | 25 | 20 |
| 11 | NO+CO+CH₄ | 7/A | 2/C | - | Z | 220 | 30 | 70 | 18 |
| 12 | NO+CO+CH₄ | 8/A | - | - | - | 570 | 50 | 280 | 130 |
| 13 | NO+CO+CH₄ | 6/Z | 8/A | - | - | 250 | 80 | 110 | 27 |

In experiments N^{º} 1, 2, 3 the results of catalytic oxidation of NO on 1 layer of oxide catalyst are given in comparison with Pt-catalyst. The after introduction of the second regeneration or combined-action catalyst layer caused considerable NO₂ emission reduction (experiments N^{º} 4, 13). Vice versa, the only regeneration catalyst (experiment N^{º} 12) isn't effective (semiproduct N₂O is produced), and in combination with catalysts of preferred oxidation (experiments N^{º} 4, 8, 13) 80%-conversion of NOx and almost complete elimination of CO and HC were gained. Experiments N^{º} 7,8,9 demonstrate the work of filter-catalyst after hydrocarbon introduction (cumole in the example) into the gas stream during 30 minutes. After such 〈〈activation〉〉 of the filter the storage of carbon-bearing regenerator, and high purification from NOx efficiency remained for a long time. Some decrease of emission, especially, NO₂, was observed while using the catalyst layer 4 with N-bearing regenerator (carbamide) after cooling the gas stream in heat-exchanger (experiments N^{º} 6, 7, 9, 10, 11). Decrease of NO₂ emission was observed even while using the layer 4 after layer 1 (experiment N^{º} 10). Comparison of the data about the purifying efficiency on different carriers allows to point on necessity of usage a complex of operations in the applied method: step-by-step catalytic processing, gas cooling in heat-exchanger, and application of water solution of regenerators.

Example 2. It illustrates the purification of exhaust gases of an internal-combustion engine: 1 - ship diesel engine L-160 PNS-Shkoda (27 l, 140 kW) at 600 rot./min., 2 - automotive diesel engine 283- 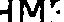 M3 (14.8 l, 220 kW) at 1000 rot./min., 3 - carburetor engine 2401 - GAZ (2.4 l, 62 kW) at 2000 rot./min. The experiments were made at constant rotation speed at medium engine loading using ceramic heater, neutralizer, and filter with different layers of oxide catalysts. Block catalysts and filter were placed on exhaust pipe, and examined at the temperature of the exhaust gases of 190°C (without heating), and at 300 and 390°C using heater-catalyst. In table 3 are given conversion levels of toxic products in exhaust gases of internal-combustion engine in stationary conditions of neutralizers work (average results for several hours of engine work in beginning period, and in brackets after 20 hours of work are given).

**Table 3**

| Engine type | Block catalyst and filter-catalyst | Toxic component | CONVERSION, % | | |
|---|---|---|---|---|---|
| | | | 190°C | 300°C | 390°C |
| 1 | 6/Z; 8/A | NOx | 15 | 53 | 65(60) |
| | | CO | 20 | 75 | 91(85) |
| | | HC | 18 | 71 | 80(75) |
| | | 〈〈C〉〉 | 8 | 20 | 26 |
| | | particles | | | |
| | 1/F | 〈〈C〉〉 | 90(95) | 95(90) | 95(95) |
| | | particles | | | |
| 2 | 6/A; 1/A | NOx | 18 | 61 | 53 |
| | | CO | 15 | 80 | 90 |
| | | HC | 16 | 75 | 85 |
| | | 〈〈C〉〉 | 10 | 15 | 25 |
| | | particles | | | |
| | 1/F | 〈〈C〉〉 | 93(90) | 95(90) | 90(95) |
| | | particles | | | |
| 3 | 9/A; 1/A | NOx | 20 | 75 | 80 |
| | | CO | 10 | 82 | 85 |
| | | HC | 5 | 80 | 87 |

As a result, complete purification of diesel exhaust gases from carbon-black particles at all engine operating regimes was achieved, and NOx, CO, and HC concentrations were lowered down to existing standards for diesel transport emissions (EURO-3). Comparative analysis of the method with division of oxidation and regeneration stages and combination of catalytic and non-catalytic reactions, with known methods and the prototype, shows high efficiency, completeness, and stability of purification. There appears the possibility of processing a complex purification using oxide catalysts and a heater for cold exhaust gases, when toxic compounds concentration is the highest.

## Claims

1. Method for purifying effluent gases, which includes toxic components treatment at least at two stages, using appropriate catalysts at each stages, is characterized with processing stages of oxidation and regeneration separately in different layers of oxide catalysts, or simultaneously in the same layer of oxide catalyst, and carbon- and/or nitrogen-and/or oxygen-bearing reagents, accumulated in reaction layer, are loaded into the gas stream.

2. Method based on p.1 is characterized by using catalysts on porous ceramic block carriers, or on filter made on high-penetrable cellular structure made on modified cordierite and/or alumina, or zeolites.

3. Method based on p.1, or 2 is characterized by using oxides of transition metals (iron, copper, manganese, nickel, silver, cobalt, chrome and others) as modifiers and active components, they are introduced by forming the carrier, or by their application on blocks in amount 1-30 mass %.

4. Method based on p.1 is characterized by using oxide compositions on base of transition, alkaline-, and rare-earth elements, zirconium and others, including, for example, compounds like perovskite.

5. Method based on p.1, or 2 is characterized by using electric-conductive additives, which allow to produce heaters with cellular structure with specific resistance of 0.1-2000 Ohm*cm and increase the exhaust gases temperature on 100-300°C, as modifiers and active components.

6. Method based on p.1, or 2, or 5 is characterized by using perovskite catalyst as electric-conductive additive.

7. Method based on p.1 is characterized by passing purifying gases through heat-exchanger, where gases are cooled on 20-150°C, after catalytic processing.

8. Method based on p.1 is characterized by adding organic compounds, subject to thermal gas-phase oxidizing transformations into reacting products, precipitated on the catalyst layer and carbon-black filter, into gas stream.

9. Method based on p.1 is characterized by using carbamide, ammonium bicarbonate, and others as nitrogen-bearing reagents on porous block carrier.

10. Method based on p.1 is characterized by adding air, water, or water solutions of regenerators into purifying gases in amount of 50-100 g/m³, containing 50-400 g/l reagents.
